# EUROPEAN PATENT APPLICATION

(11) **EP 4 756 717 A1**
(43) Date of publication of application: **10.06.2026**
(21) Application number: 24217793.9
(22) Date of filing: 05.12.2024
(51) Int. Cl.: G06T 7/70

(54) **OCCLUDED VIEW BODY POSTURE PREDICTION**

(71) Applicant: Koninklijke Philips N.V., 5656 AE Eindhoven (NL)
(72) Inventor: SOMMER, Karsten, Eindhoven (NL); KRUEGER, Sascha, Eindhoven (NL)
(74) Representative: Philips Intellectual Property & Standards

(57) **Abstract**

Disclosed is a computer-implemented method (100) for detecting anatomical keypoints (200) using a camera configured to image at least a portion of a body of a subject (202), the method comprising: receiving (102) image data (204), receiving (104) anatomical keypoint data in response to inputting the image data (204) into an anatomical keypoint detection neural network, determining (106) the set of anatomical keypoints (200), detecting (108) a set of body parts of the body in the image data (204), resulting in cropped image data (206); receiving (110) body part specific keypoint data in response to inputting the cropped image data (206) into at least one body part specific keypoint detection neural network, determining (112) the set of body part specific keypoints (208); and augmenting (114) the anatomical keypoints (200) by the body part specific keypoints (208).

## Description

### FIELD OF THE INVENTION

The invention relates to the field of medical imaging, in particular to the detecting of a posture of a subject to be imaged in a medical imaging system.

### BACKGROUND OF THE INVENTION

In order to perform medical imaging exams such as for example medical resonance imaging or computed tomography examinations on a subject, the subject is required to be positioned in a particular posture required by the medical imaging system used to perform the examination. Said posture may exemplarily depend on particular parts of the body to be imaged, and/or a geometry of the medical imaging system. For example, the subject may be required to be in a supine or prone position or laying on the side. As a further example, the subjects may be required to have his or her arms positioned at the side of the body or raised over his or her head.

The subject may be brought into a room in which the medical imaging exam is performed laying on a patient support and positioned in a particular posture. Furthermore, the subject may be covered by various objects occluding at least parts of the body of the subject.

In order to perform the medical imaging exam, the posture of the subject needs to be aligned with a posture compatible with the medical imaging system and the medical imaging exam to be performed.

The document US2023140003A1 describes systems, methods, and instrumentalities for constructing a multi-view patient model based on multiple single-view models of the patient. Each of the single-view models may be generated based on images captured by a sensing device and, dependent on the field of the view of the sensing device, may depict some keypoints of the patient's body with a higher accuracy and other keypoints of the patient's body with a lower accuracy. The multi-view patient model may be constructed using respective portions of the single-view models that correspond to accurately depicted keypoints.

### SUMMARY OF THE INVENTION

In one aspect, the disclosure describes a computer-implemented method for detecting anatomical keypoints using a camera configured to image at least a portion of a body of a subject, the method comprising receiving image data from the camera, the image data comprising an image of the body. The method further comprises receiving anatomical keypoint data in response to inputting the image data into an anatomical keypoint detection neural network, wherein the anatomical keypoint detection neural network is configured to generate the anatomical keypoint data, wherein the anatomical keypoint data is descriptive of a set of anatomical keypoints. The method further comprises determining the set of anatomical keypoints from the anatomical keypoint data, wherein the set of anatomical keypoints indicates keypoints of the body. The method further comprises detecting a set of body parts of the body in the image data, resulting in cropped image data of body parts in the set of body parts. The method further comprises receiving body part specific keypoint data in response to inputting the cropped image data into at least one body part specific keypoint detection neural network, wherein the at least one body part specific keypoint detection neural network is configured to generate the body part specific keypoint data, wherein the body part specific keypoint data is descriptive of a set of body part specific keypoints. The method further comprises determining the set of body part specific keypoints from the body part specific keypoint data, wherein the set of body part specific keypoints indicates keypoints of the set of body parts. The method further comprises augmenting the anatomical keypoints by the body part specific keypoints. The method further comprises providing the augmented anatomical keypoints.

In another aspect, the disclosure describes a computer system configured for detecting anatomical keypoints using a camera configured to image at least a portion of a body of a subject, wherein the computer system comprises a memory unit storing machine executable instructions, an anatomical keypoint detection neural network, and at least one body part specific keypoint detection neural network, wherein execution of the machine executable instructions causes the computer system to receive image data from the camera, the image data comprising an image of the body. Execution of the machine executable instructions further causes the computer system to receive anatomical keypoint data in response to inputting the image data into an anatomical keypoint detection neural network, wherein the anatomical keypoint detection neural network is configured to generate the anatomical keypoint data, wherein the anatomical keypoint data is descriptive of a set of anatomical keypoints. Execution of the machine executable instructions further causes the computer system to determine the set of anatomical keypoints from the anatomical keypoint data, wherein the set of anatomical keypoints indicates keypoints of the body. Execution of the machine executable instructions further causes the computer system to detect a set of body parts of the body in the image data, resulting in cropped image data of body parts in the set of body parts. Execution of the machine executable instructions further causes the computer system to receive body part specific keypoint data in response to inputting the cropped image data into at least one body part specific keypoint detection neural network, wherein the at least one body part specific keypoint detection neural network is configured to generate the body part specific keypoint data, wherein the body part specific keypoint data is descriptive of a set of body part specific keypoints. Execution of the machine executable instructions further causes the computer system to determine the set of body part specific keypoints from the body part specific keypoint data, wherein the set of body part specific keypoints indicates keypoints of the set of body parts. Execution of the machine executable instructions further causes the computer system to augment the anatomical keypoints by the body part specific keypoints. Execution of the machine executable instructions further causes the computer system to provide the augmented anatomical keypoints.

In another aspect, the disclosure describes a computer program product, wherein the computer program product comprises machine executable instructions configured for causing a computer system to execute the disclosed method.

### BRIEF DESCRIPTION OF THE DRAWINGS

In the following, examples are described in greater detail making reference to the drawings in which:
Fig. 1 is a flowchart for performing a method for detecting anatomical keypoints using a camera configured to image at least a portion of a body of subject.
Fig. 2A is a schematic of exemplary image data showing a subject on a patient support near a medical imaging system, wherein part of the body of the subject is covered by an occlusion.
Fig. 2B is a schematic of the image data as shown in Fig. 2A, wherein (augmented) anatomical keypoints are indicated on the body of the subject.
Fig. 3A is a schematic of exemplary image data showing the subject on the patient support near the medical imaging system, wherein the body of the subject is partially covered by an occlusion and a partial set of anatomical keypoints is indicated on the body of the subject,
Fig. 3B is a schematic of exemplary cropped image data obtained from the image data shown in Fig. 3A, showing a hand of the subject, wherein body part specific keypoints are highlighted in the cropped image data.
Fig. 3C is a schematic of the image data as shown in Fig. 3A, wherein the anatomical keypoints have been augmented based on the body part specific keypoints shown in Fig. 3B.
Fig. 4A is a schematic of exemplary image data showing the subject on the patient support near the medical imaging system, wherein the body of the subject is covered by an occlusion leaving only the face of the subject uncovered.
Fig. 4B is a schematic of exemplary cropped image data obtained from the image data shown in Fig. 4A, showing the face of the subject, wherein body part specific keypoints are highlighted in the cropped image data.
Fig. 4C is a schematic of the image data as shown in Fig. 4A, wherein the anatomical keypoints have been augmented based on the body part specific keypoints shown in Fig. 4B.
Fig. 5 is a block diagram of an exemplary computer system for implementing at least part of the present method in accordance with an example of the present subject matter.

### DETAILED DESCRIPTION OF EMBODIMENTS

The present subject matter may advantageously enable an accurate determination of anatomical keypoints, and thereby enable an accurate determination of a position of the body of the subject in the image data. The determined position of the body may be further used to determine the position of the subject relative to a medical imaging system. This may be especially advantageous for the execution of medical imaging examinations using the medical imaging system, wherein the body of the subject is required to be positioned in a particular body posture relative to the medical imaging system.

The present subject matter may further improve an accuracy and/or speed of determining the position of the body via the anatomical keypoints by using the anatomical keypoint detection neural network, in particular as the anatomical keypoint detection neural network may be trained on a dataset of possible positions of the body that are compatible with the medical imaging examinations performed by the medical imaging system.

The present subject matter may further enable a detection of anatomical keypoints which could not be captured from the image data using the anatomical keypoint detection neural network by using the at least one body part specific keypoint detection neural network, as the body part specific keypoint detection neural network may possess an improved accuracy for detecting anatomical keypoints in specific body parts, for example the face, hands or feet, compared to the anatomical keypoint detection neural network. Furthermore, the anatomical keypoints detected by the anatomical keypoint detection neural network may be repositioned based on the additional information provided by the body part specific keypoints, thereby improving the accuracy of the determined position of the body.

The present subject matter may further enable an accurate determination of the anatomical keypoints, and thereby the position of the body, despite the body being at least partially occluded in the image data acquired by the camera. For example, the subject may be prepared for the medical imaging examination in another room different from the site of the medical imaging system. Following said preparing, according to this example, the subject may be transported to the site of the medical imaging system, with the body of the subject being already at least partially covered by occlusions such as clothes, blankets, sheets, bandages, coils, safety restraints, in particular safety straps. Furthermore, the occlusions may comprise parts of the medical imaging system visible in the image data acquired by the camera.

The present subject matter may advantageously be applied to a variety of medical imaging systems, wherein the medical imaging system may be any one of a magnetic resonance imaging system, a computed tomography system, an x-ray system, a positron emission tomography system, a single photon emission tomography system, a digital fluoroscopy system, and a diagnostic ultrasound system.

In one example of the method, the anatomical keypoint data comprises probability maps for individual keypoints in the set of anatomical keypoints, wherein the probability maps comprise probability values associated with the probability of the presence of the individual keypoints, and/or wherein the body part specific keypoint data comprises probability maps for individual keypoints in the set of body part specific keypoints, wherein the probability maps comprise probability values associated with the probability of the presence of the individual body part specific keypoints, wherein the determining of the set of anatomical keypoints from the anatomical keypoint data and/or the determining of the set of body part specific keypoints from the body part specific keypoint data comprises determining positions of the individual keypoints based on the probability values, in particular wherein the positions correspond to pixels of the image data or the cropped image data associated with local maxima of the probability values.

The determining of the probability maps may advantageously enable a quantification of confidence in possible positions of the individual keypoints at any of the pixels of the image data or the cropped image data. Said quantification provided by the probability maps may further enable optimizing the determining of the positions of the individual keypoints by positioning the individual keypoints at pixels associated with high probability values compared to the probability values associated with pixels surrounding the determined positions.

In one example of the method, the method further comprises a prediction of missing keypoints of the anatomical keypoints, wherein optionally the prediction of the missing keypoints comprises determining at least part of the missing keypoints from the set of body part specific keypoints, and/or the augmenting comprises a changing of the positions, wherein the changing of the positions is performed based on distances between the positions of the anatomical keypoints and the positions of the missing keypoints.

The body part specific keypoint detection neural networks may be advantageous for detecting the missing keypoints which could not be detected by the anatomical keypoint detection neural network, wherein at least part of the missing keypoints may be identified with at least part of the body part specific keypoints. Furthermore, positions of the keypoints which were detected by the anatomical keypoint detection neural network may be changed, which may result in a more accurate set of augmented anatomical keypoints. For example, a position of a keypoint detected by the anatomical keypoint detection neural network which may be associated with a position of a shoulder of the subject may be repositioned based on a distance relative to a keypoint detected by a body part specific keypoint detection neural network which may be associated with a position of a hand of the subject.

In one example of the method, the method further comprises changing of the probability values of the anatomical keypoints in response to adding the predicted missing keypoints to the anatomical keypoints, in particular wherein the changing of the probability values is performed based on distances between the positions of the anatomical keypoints and the positions of the missing keypoints.

The changing of the probability values in response to adding the predicted missing keypoints advantageously enables an updating of the quantification of confidence of the positions of the individual keypoints. For example, if a position of a particular keypoint is not changed in response to the adding of the predicted missing keypoints, the probability values associated with the pixels corresponding to the position or close to the position of said particular keypoint may be increased while probability values associated with pixels far from the position of said particular keypoint may be decreased. In another example, if a position of a particular keypoint is changed by the augmenting, in particular in response to the adding of the predicted missing keypoints, the probability values of pixels corresponding to the position of said particular keypoint may be decreased, while probability values associated with pixels at a particular distance to the predicted missing keypoints may be increased.

In one example of the method, the method further comprises determining a subset of the anatomical keypoints, wherein the probability values of the subset of the anatomical keypoints exceed a minimum keypoint probability threshold comprised in an anatomical model. According to this example, the anatomical model may further perform the predicting of the missing keypoints using the subset of the anatomical keypoints as an input.

The use of the subset of anatomical keypoints for the prediction of the missing keypoints may improve the accuracy with which the anatomical model may predict the missing keypoints. Furthermore, the use of the subset may reduce computational complexity of the anatomical model and/or increase with which the anatomical model may predict the missing keypoints. The minimum keypoint probability threshold may advantageously be set at higher or lower values, enabling trade-offs between the speed and accuracy of the prediction of the missing keypoints.

In one example of the method, the anatomical model comprises a keypoint completion neural network, and wherein the keypoint completion neural network is configured to perform the predicting of the missing keypoints in response to receiving the subset of the anatomical keypoints as input. Instead or in addition, the anatomical model may comprise a statistical model, wherein the statistical model comprises a set of parameterized limb lengths of the body of the subject and a set of probability distributions of joint angles of the body of the subject, wherein the predicting of the missing keypoints comprises predicting distances of the missing keypoints towards the subset of the anatomical keypoints based on the set of parameterized limb lengths and predicting directions of the missing keypoints relative to the subset of anatomical keypoints based on the set of probability distributions of joint angles.

The anatomical model may advantageously enable a detection of anatomical keypoints which were not detected by both the anatomical keypoint detection neural network and the at least one body part specific neural network. The statistical model may improve the accuracy of the positions of the predicted missing keypoints by restricting possible positions of the missing keypoints based on the subset of anatomical keypoints and likely distances and/or directions of the missing keypoints from the subset of anatomical keypoints based on the set of parameterized limb lengths and/or the set of probability distributions of joint angles. For example, the set of parameterized limb lengths may indicate an average length of an upper arm, and the set of probability distributions may indicate a possible joint angle of a shoulder between 0° and 180°, wherein the angle of 0° may indicate the upper arm to be positioned at the side of the body and the angle of 180° may indicate the upper arm to be raised over the head of the subject.

In one example of the method, the image data and the cropped image data comprise intensity values associated with the pixels of the image data or the cropped image data. Said intensity values are processed by the anatomical keypoint detection neural network to generate the anatomical keypoint data and by the body part specific keypoint detection neural network to generate the body part specific keypoint data respectively. The anatomical keypoint data and/or the body part specific keypoint data may comprise separate probability maps for the individual keypoints. According to this example, the generating of the anatomical keypoint data by the anatomical keypoint detection neural network and/or the generating of the body part specific keypoint data by the body part specific keypoint detection neural network comprises determining the probability maps from the intensity values. The probability maps may therefore assign a probability value to any pixel of the pixels in the image data and/or the cropped image data. Said probability values indicate probabilities that the pixels correspond to an individual keypoint. According to this example, the anatomical keypoint detection neural network and/or the body part specific keypoint detection neural network transform the intensity values into probabilistic representations highlighting likely positions of the individual keypoints based on patterns learned during a training phase of the anatomical keypoint detection neural network and/or the body part specific keypoint detection neural network.

In one example, the positions of the individual keypoints may be determined based on the probability values by determining the positions to be at local maxima of the probability values. Alternatively, the determining of the positions of the individual keypoints based on the probability values may comprise fitting an expected statistical distribution to the probability values, determining deviations of the probability values from the expected statistical distribution, and determining the positions of the individual keypoints based on the deviations, wherein preferably the expected statistical distribution comprises a two-dimensional Gaussian distribution. Instead or in addition, fitting the expected statistical distribution may comprise determining a set of local maxima of the probability values, fitting a set of expected statistical distributions centered on local maxima of the set of local maxima, determining an optimal expected statistical distribution from the set of expected statistical distributions, providing the optimal expected statistical distribution as the expected statistical distribution. The optimal expected statistical distribution may minimize the deviations of the probability values compared to other expected statistical distributions in the set of expected statistical distributions. The determining of the positions of the individual keypoints based on the deviations may exemplarily comprise determining the optimal expected statistical distributions for the individual keypoints and determining the positions to be at local maxima of the optimal expected statistical distributions. Instead or in addition, the determining of the positions of the individual keypoints based on the probability values may comprise evaluating statistical measures of the probability values in local vicinities around the pixels, wherein the positions of the individual keypoints are determined based on the evaluated statistical measures, wherein preferably the statistical measures comprise sums, averages, and/or medians of the probability values in the local vicinities. For example, the statistical measures may result in probability maps comprising averaged probability values for the pixels. The positions of the individual keypoints may then be determined to be at local maxima of said averaged probability values. The local maxima of the intensity values, the (averaged) probability values and/or the (optimal) expected statistical distributions may in particular correspond to global maxima. The local vicinities may preferably be defined a predetermined distance from the pixels in the image data or the cropped image data. The predetermined distance may preferably comprise a Euclidean distance.

The determining of the positions of the individual keypoints at the local maxima of the (averaged) probability values and/or at the local maxima of the optimal expected statistical distributions may improve the accuracy of the positions of the individual keypoints, for example be reducing an impact of outliers in the intensity values.

In one example of the method, the anatomical model further comprises subject metadata, the subject metadata being representative of a body shape of the subject, wherein the set of parameterized limb lengths and/or the set of probability distributions of joint angles is adapted based on the subject metadata.

The subject metadata may advantageously provide further information on the body shape of the subject, enabling an adaptation of the anatomical model towards the body shape, which may thereby increase an accuracy of the positions of the missing keypoints predicted by the anatomical model. For example, values in the set of parameterized limb lengths may indicate average arm or leg lengths, wherein said values may be modified based on a height of the subject obtained from the subject metadata.

In one example of the method, the subject metadata is received from a radiological information system and/or inferred from the image data using object recognition algorithms configured for recognizing the body shape.

The receiving of the subject metadata from the radiological information system may advantageously leverage information contained in pre-existing data regarding the subject. The use of the object recognition algorithms may advantageously enable the acquisition of such information despite an absence of said pre-existing data.

In one example of the method, the camera is registered with a patient support for supporting the body of the subject. According to this example, the method further comprises moving the patient support relative to a medical imaging system based on the augmented anatomical keypoints for enabling an imaging of the body.

The registering of the camera with the patient support advantageously facilitates the determining of the position of the body relative to the patient support and/or relative to the medical imaging system. The moving of the patient support may advantageously ensure that body parts to be imaged by the medical imaging system are correctly positioned within a field of view of the medical imaging system.

In one example of the method, the detecting of the set of body parts of the body of the subject in the image data comprises segmenting the image comprised in the image data into segmented images and receiving the cropped image data in response to inputting the segmented images into a body part recognition neural network.

The segmenting of the image may advantageously enable the body part recognition neural network to process multiple segmented images in parallel. Accuracy and/or speed with which the body part recognition neural network provides the cropped image data may be increased due to the reduced size of the segmented image data compared to the image comprised in the image data.

In one example of the method, the detecting of the set of body parts is performed on a region of interest of the image data, wherein the anatomical keypoints are contained within the region of interest, wherein the region of interest further comprises a minimal spacing distance, and wherein edges of the region of interest are located at distances from the anatomical keypoints exceeding the minimal spacing distance, and/or the region of interest excludes image portions comprised in the image data in case the image portions contain parts of the medical imaging system.

The detecting of the set of body parts on the region of interest may advantageously reduce a size of the image data to be received as input by the body part recognition neural network. Said reduced size may further result in an improved accuracy and/or speed with which the body parts may be detected by the body part recognition neural network.

In one example of the method, the method further comprises comparing the augmented anatomical keypoints to a set of possible body postures, resulting in similarity values between the augmented anatomical keypoints and the set of possible body postures, selecting a predicted body posture from the set of possible body postures based on the similarity values, determining if the predicted body posture matches a desired body posture, and in case the predicted body posture does not match the desired body posture, providing a warning signal, wherein the warning signal preferably comprises instructions for aligning the body of the subject towards the desired body posture. The warning signal may preferably be provided as a text notification on a display of a computer system of the medical imaging system. Instead or in addition, the warning signal may be provided as an audio signal, such as a synthesized speech signal.

The providing of the warning signal may advantageously notify and instruct a technician or operator of the medical imaging system to align the body of the subject towards the desired body posture, which may thereby reduce a setup time for the medical imaging examination. Furthermore, the aligning of the body in response to the warning signal may improve a quality of medical images resulting from the medical imaging examination.

The described advantages of the disclosed method equally apply to the disclosed computer system and the disclosed computer program product.

In the following, similar elements are denoted by the same reference numerals.

It is understood that one or more of the aforementioned examples may be combined as long as the combined examples are not mutually exclusive.

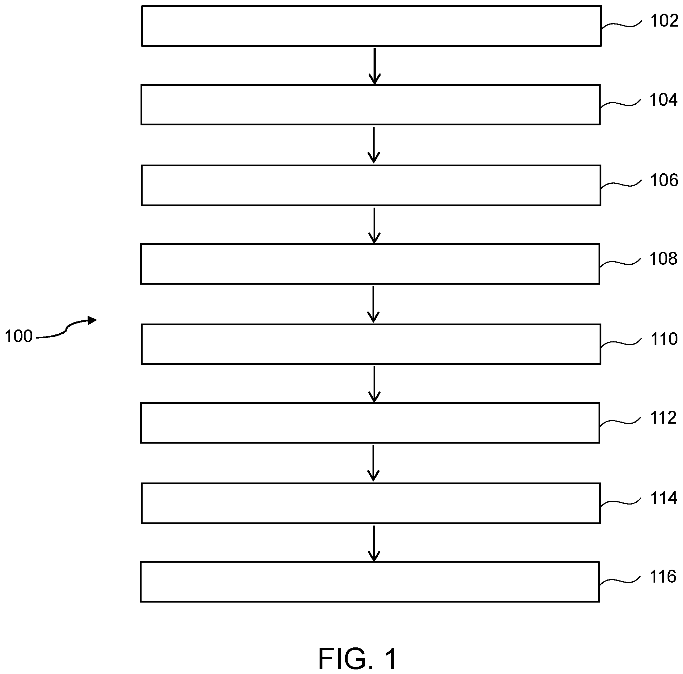

Fig. 1 is a flowchart for performing a method 100 for detecting anatomical keypoints using a camera configured to image at least a portion of a body of a subject.

In step 102 of the method 100, the image data is received from the camera, the image data comprising an image of the body.

The camera may be any one of an infrared camera configured to receive the image data as two-dimensional infrared image data, an RGB camera configured to receive the image data as two-dimensional RGB image data, and an RGB-D camera configured to receive the image data as three-dimensional RGB-D image data. The camera may further be configured to receive the image data as a continuous stream of the image data.

In step 104 of the method 100, the anatomical keypoint data is received in response to inputting the image data into the anatomical keypoint detection neural network, wherein the anatomical keypoint detection neural network is configured to generate the anatomical keypoint data, wherein the anatomical keypoint data is descriptive of the set of anatomical keypoints. The anatomical keypoint data received from the anatomical keypoint detection neural network may be received as a set of images, wherein images in the set of images correspond to individual keypoints of the anatomical keypoints and wherein the images comprise the intensity values.

In step 106 of the method 100, the set of anatomical keypoints is determined from the anatomical keypoint data, wherein the set of anatomical keypoints indicates keypoints of the body. The determining 106 may comprise determining the probability values based on the intensity values of the set of images received in step 104 and determining a set of coordinates indicating the positions of the individual keypoints of the anatomical keypoints based on the probability values. Depending on the image data provided by the camera, the set of coordinates may comprise two-dimensional or three-dimensional coordinates. The anatomical keypoints may exemplarily correspond to positions of characteristic areas of the body, such as the eyes, nose, mouth, shoulders, elbows, hands, hip, knees and/or feet of the subject.

In step 108 of the method 100, the set of body parts of the body in the image data is detected, resulting in the cropped image data of body parts in the set of body parts. The detecting 108 may exemplarily comprise segmenting the image data into segmented images and providing the segmented images into the body part recognition neural network to be processed in parallel. In an alternative example, the body part recognition neural network may be configured to process individual segmented images consecutively. The segmenting may exemplarily comprise segmenting the image data based on a grid structure. The grid structure may for example be determined in order to result in a predetermined number of segmented images. The body part recognition neural network may be configured to provide cropped image data of one particular body part or cropped image data of multiple body parts.

In step 110 of the method 100, the body part specific keypoint data is received in response to inputting the cropped image data into the at least one body part specific keypoint detection neural network, wherein the at least one body part specific keypoint detection neural network is configured to generate the body part specific keypoint data, wherein the body part specific keypoint data is descriptive of a set of body part specific keypoints. The body part specific keypoint data may possess a format and/or structure analogous to the anatomical keypoint data received in step 104.

In one example, the body part specific keypoint detection neural network may be a neural network hand keypoint detection neural network trained on images of hands labeled at keypoints of a hand, such as for example fingertips, knuckles and/or a central position of the palm or back of the hand. In another example, the body part specific keypoint detection neural network may be foot keypoint detection neural network trained on images of feet labeled at keypoints of a foot, such as for example toes, a heel, and/or a central position of the sole or back of the foot. In yet another example, the body part specific keypoint detection neural network may be a face keypoint detection neural network trained on images of faces labeled at keypoints of a face, such as for example eyes, eyebrows, a nose, and/or a center and/or corners of a mouth.
Step 110 may comprise receiving body part specific keypoint data from one body part specific keypoint detection neural network or a set of body part specific keypoint detection neural networks trained for detecting keypoints of different body parts.

In step 112 of the method 100, the set of body part specific keypoints is determined from the body part specific keypoint data, wherein the set of body part specific keypoints indicates keypoints of the set of body parts. The determining 112 of the body part specific keypoints from the body part specific keypoint data may be performed analogously to the described determining 106 of the anatomical keypoints from the anatomical keypoint data.

In step 114 of the method 100, the anatomical keypoints are augmented by the body part specific keypoints. The augmenting 114 may comprise adding the body part specific keypoints to the anatomical keypoints. The augmenting may further comprise changing positions and/or probability values associated with the anatomical keypoints in response to the adding of the body part specific keypoints.

In step 116 of the method 100, the augmented anatomical keypoints are provided.

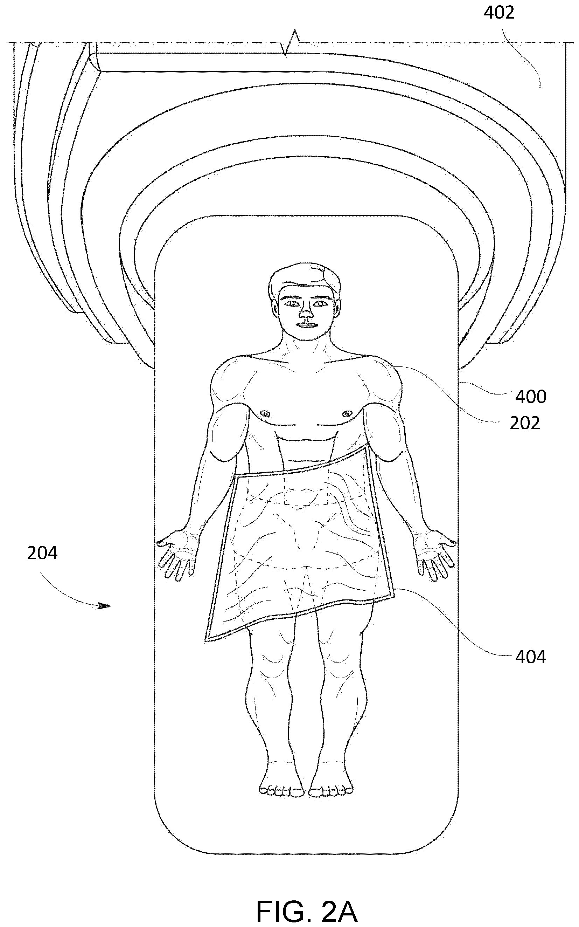

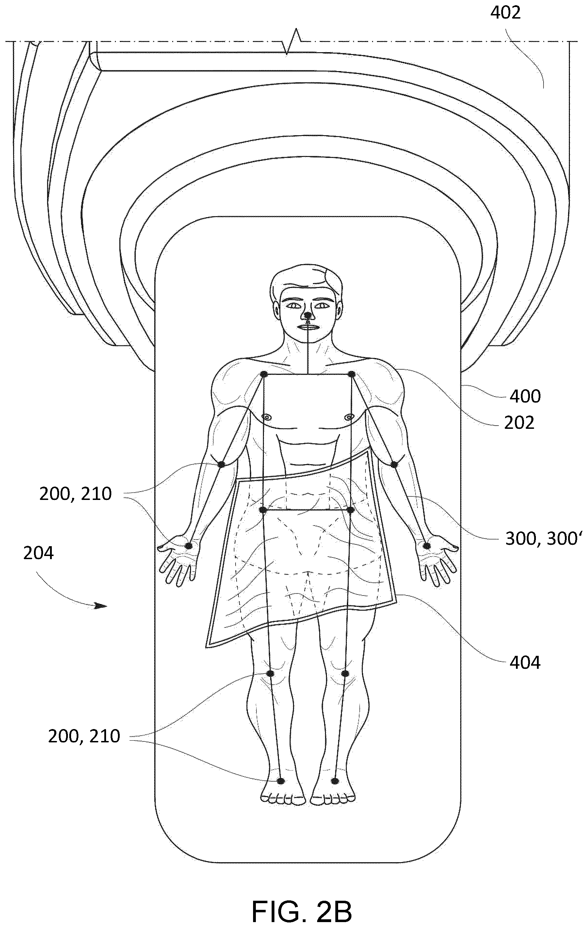

Fig. 1 may exemplarily be read in conjunction with Fig. 2A and Fig. 2B, wherein Fig. 2A and Fig. 2B are schematics of exemplary image data 204 showing the subject 202 on the patient support 400 near the medical imaging system 402. According to this example, part of the body of the subject 202 is covered by an occlusion 404 and the subject 202 is positioned in a body posture with the arms of the subject 202 being positioned at the side of the body and the head of the subject facing towards the medical imaging system 402. The occlusion 404 as shown in this example may exemplarily comprise a blanket covering the hip of the subject 202.

Fig. 2A shows the exemplary image data 204 as received by the camera before the disclosed method 100 is applied to said image data 204. The disclosed method 100 of Fig. 1 may then be applied to the image data 204 shown in Fig. 2A to detect the (augmented) anatomical anatomical keypoints 200 in said image data 204 as shown in Fig. 2B despite the presence of the occlusion 404 covering the hip of the subject 202 in the exemplary image data 204.

According to one example, the image data 204 as shown in Fig. 2A may enable the detecting of (augmented) anatomical keypoints 200, 210 across the body of the subject 202 despite the occlusion 404 using the anatomical model 300. In Fig. 2B as well as the following figures, keypoint connections 300' between the (augmented) anatomical keypoints 200, 210 may be optionally displayed in the image data 204 to facilitate a recognition of the body posture of the subject 202. According to this example, the anatomical model 300 may receive a subset of the augmented anatomical keypoints 210 located at positions surrounding the occlusion 404 as input, and predict missing keypoints at the hip of the subject 202. Said predicting may exemplarily be performed using the statistical model, in particular using the set of parameterized limb lengths and the set of probability distributions of joint angles. For example, the statistical model may predict likely positions of the keypoints at the hip based on distances and directions from the keypoints of the shoulders and the keypoints of the knees.

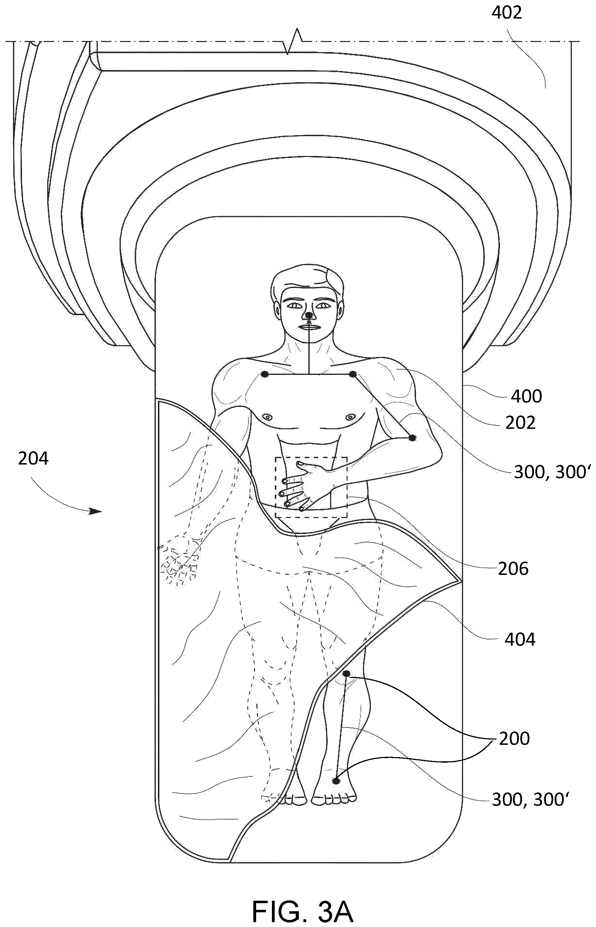

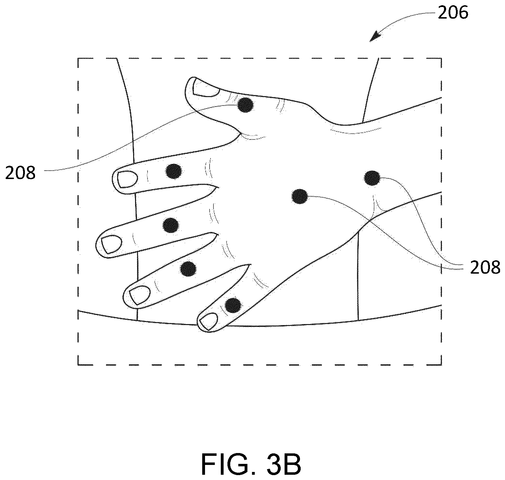

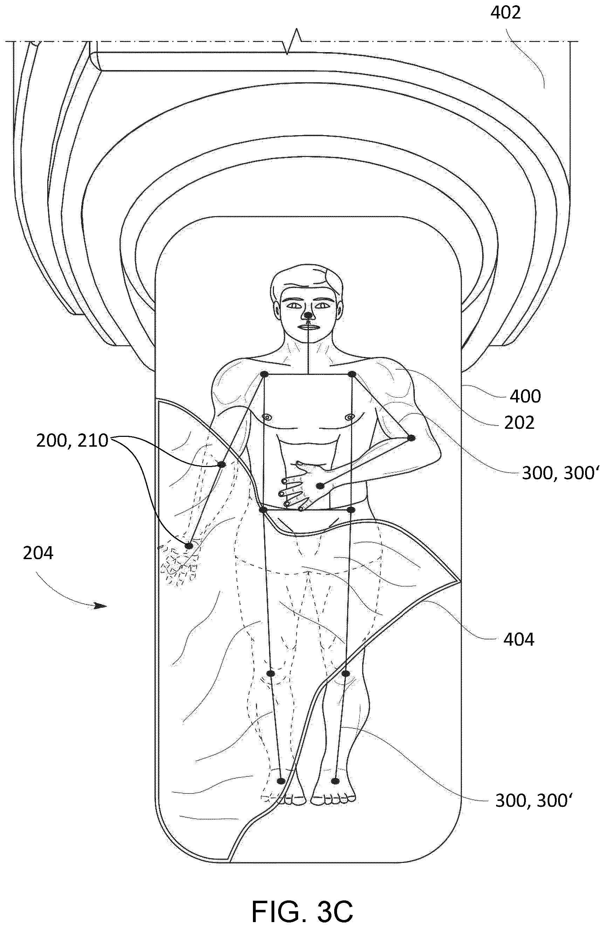

Fig. 1 may alternatively be read in conjunction with Fig. 3A, Fig. 3B and Fig. 3C, wherein Fig. 3A, Fig. 3B and Fig. 3C are schematics of exemplary image 204 data showing the subject 202 on the patient support 400 near the medical imaging system 402, wherein the body of the subject 202 is partially covered by an occlusion 404. According to this example, the occlusion 404 may comprise a blanket covering a larger area of the body than the blanket shown in Fig. 2A and Fig. 2B. Furthermore, compared to the previous example of Fig. 2A and Fig. 2B, the left hand of the subject 202 is instead positioned on top of the body of the subject 202.

The increased area of the body covered by the occlusion 404 compared to the occlusion shown in Fig. 2A and Fig. 2B may decrease the number of anatomical keypoints 200 that may be detected in step 104 by the anatomical keypoint detection neural networks with probability values exceeding the minimum keypoint probability threshold. The anatomical keypoints 200 shown in Fig. 3A may indicate a partial set of anatomical keypoints 200 which exceed the minimum keypoint probability threshold. Consequently, the anatomical keypoints 200 shown in Fig. 3A are incomplete and the keypoint connections 300' between the anatomical keypoints 200 are disjoint.

An exemplary segment 206 of the image data 204 is highlighted, as it may be provided following step 108 of the method 100, wherein the segment 206 comprises a hand of the subject. Said exemplary segment 206 may be provided to a body part specific keypoint detection neural network as exemplary cropped image data 206 to perform step 110 of the method 100.

Fig. 3B is a schematic of the exemplary cropped image data 206 obtained from the image data 204 shown in Fig. 3A, showing the hand of the subject 202, wherein body part specific keypoints 208 are highlighted in the cropped image data 206 as they may be obtained following step 112 of the method 100, wherein the body part specific keypoint detection neural network comprises a hand keypoint detection neural network. Having obtained the body part specific keypoints 208 according to this example, the anatomical keypoints shown in Fig. 3A may be augmented into exemplary augmented anatomical keypoints 210 as shown in Fig. 3C.

According to this example, the augmenting 114 comprised adding the body part specific keypoints 208 shown in Fig. 3B to obtain the augmented anatomical keypoints 210 shown in Fig. 3C. Using said augmented anatomical keypoints 210, the anatomical model 300 may exemplarily have predicted the positions of remaining missing keypoints, e.g. the keypoints at the hip, the right arm and the right leg of the subject 202. Following said predicting of the missing keypoints, the keypoint connections 300' shown in Fig. 3C are no longer disjoint, thereby more clearly indicating the body posture of the subject 202 compared to Fig. 3A.

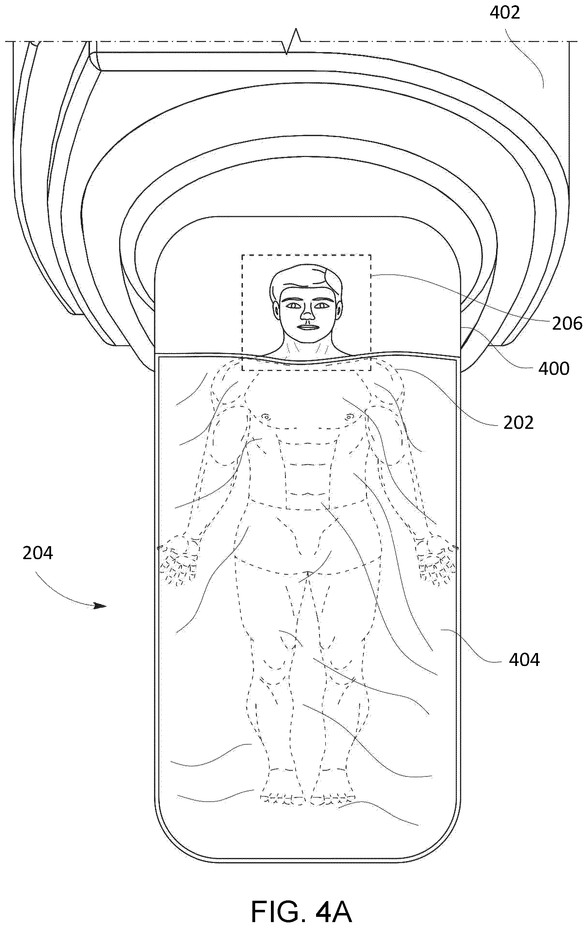

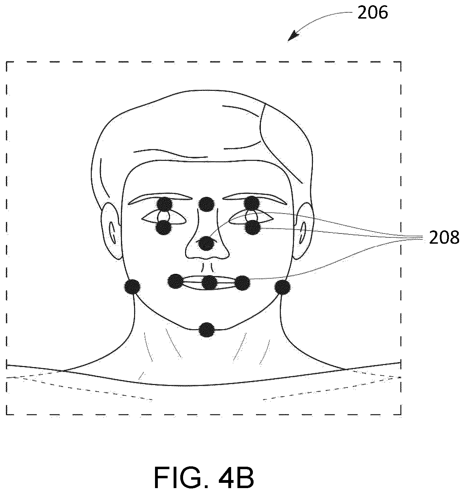

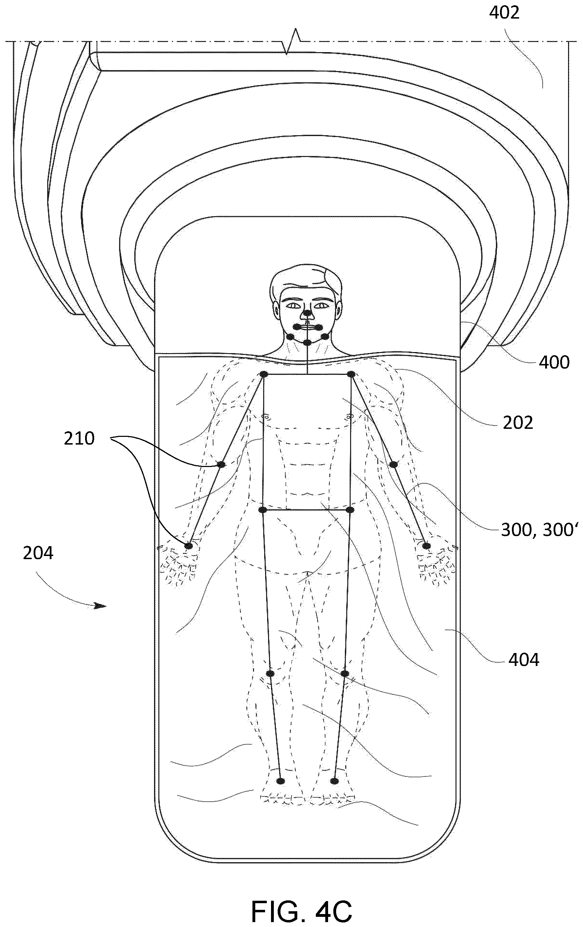

Fig. 1 may alternatively be read in conjunction with Fig. 4A, Fig. 4B and Fig. 4C, wherein Fig. 4A, Fig. 4B and Fig. 4C are schematics of exemplary image data 204 showing the subject 202 on the patient support 400 near the medical imaging system 402, wherein the body of the subject 202 is covered by an occlusion 404 leaving only the face of the subject 202 uncovered. According to this example, the extent of the occlusion 404 may lead to the anatomical keypoints 200 not exceeding the minimum keypoint probability threshold. Therefore, no anatomical keypoints 200 are indicated in Fig. 4A.

An exemplary segment 206 of the image data 204 is highlighted in Fig. 4A, wherein said segment 206 comprises the face of the subject 202, as it may exemplarily be provided following step 108 of the method 100. Said exemplary segment 206 may be provided to a body part specific keypoint detection neural network as exemplary cropped image data 206 to perform step 110 of the method 100.

Fig. 4B is a schematic of the exemplary cropped image data 206 obtained from the image data 204 shown in Fig. 4A, showing the face of the subject 202, wherein body part specific keypoints 208 are highlighted in the cropped image data 206 as they may be obtained following step 112 of the method 100, wherein the body part specific keypoint detection neural network is a face keypoint detection neural network. Having obtained the body part specific keypoints 208 according to this example, the anatomical keypoints shown in Fig. 4A may be augmented into exemplary augmented anatomical keypoints 210 as shown in Fig. 4C. Furthermore, the anatomical model 300 may predict the missing keypoints, such as keypoints of the shoulders, arms, hips, knees and feet according to this example using the augmented anatomical keypoints 210, in particular the augmented anatomical keypoints 210 located at the face may exceed the minimum keypoint probability threshold due to being detected by a more specialized face keypoint detection neural network. Therefore, despite the extent of the occlusion 404 in Figs. 4A, 4B and 4C, the augmented anatomical keypoints may be detected, resulting in connected keypoint connections 300' indicating a body posture of the subject 202 which could not be detected using only the anatomical keypoint detection neural network.In the following, various examples and implementation details relating to the training, structure and use of the neural networks used by the disclosed method 100 are described. Said examples and implementation details may apply to any of the previously described exemplary applications of the method 100, in particular any one of the examples shown in Figs. 2A and 2B, Figs. 3A, 3B and 3C, or Figs. 4A, 4B and Fig. 4C.

The body shape of the subject as described by the subject metadata may comprise at least one of a gender of the subject, an age of the subject, a height of the subject, a weight of the subject, a body mass index of the subject, information about body proportions of the subject and/or information about facial features of the subject, wherein preferably the gender and/or age of the subject are determined based on the recognized facial features, and wherein preferably the weight and/or the body mass index are determined based on the body proportions. The information about the facial features may exemplarily comprise distances between the eyes, eyebrows, nose, ears and/or mouth. The information about the facial features may further comprise sizes and/or shapes of the facial features. The information about body proportions may exemplarily comprise lengths of the arms and legs, distances between the shoulders and/or distances between the elbows and the shoulders and/or hands.

Any training data used for training any of the described neural network models, that is the anatomical keypoint detection neural network, the at least one body part specific keypoint detection neural network, the body part recognition neural network and the keypoint completion neural network, may be labelled with information as comprised by the subject metadata.

In one example, multiple body part specific keypoint detection neural networks may be trained for detecting body part specific keypoints of a particular body part using training images matching only to specific subjects. For example, the face keypoint detection neural network may be trained using training data comprising only images of faces of males or only females, and/or images of subjects in a specific age range. Depending on the subject metadata, the face recognition neural network used in step 110 may be chosen from said multiple body part specific keypoint detection neural networks such that the training data used for training the face network most closely resembles the image data based on the subject metadata. This example may similarly apply to body part specific keypoint detection neural networks trained for detecting other body parts.

The training process of any of the described neural network models may involve several steps. First, a comprehensive dataset of annotated training images may be collected, displaying subjects in various body postures including anatomical keypoints at specified locations in the training images. Depending on the image data 24 received by the camera, the training images may be two-dimensional or three-dimensional training images. The dataset may be split into training, validation, and test sets to ensure robust model evaluation. Data augmentation techniques, such as rotation, scaling, and flipping, can be applied to enhance the diversity of the training images and improve the neural network model's generalization. The neural network model's performance can be optimized using loss functions such as Mean Squared Error (MSE) or Mean Absolute Error (MAE), and techniques like early stopping, learning rate scheduling, dropout, and regularization can be employed to prevent overfitting. The trained model can then be evaluated on the test set to assess its predictive accuracy and generalization capability.

The training process may further comprise removing subsets of keypoints from the labeled training images and using the neural networks to predict the removed subsets of keypoints. Weights and/or biases of the neural network may be adapted based on distances of predicted positions of the removed subsets of keypoints to the actual positions of the removed subsets of keypoints in the training data.

The training images may be real training images displaying real subjects, and/or synthetic training images synthesized using data synthesis algorithms. The data synthesis algorithms may be configured to generate synthetic training images mirroring features of the real training images. For example, a range or distribution of values of a feature in the synthetic training images may correspond to a range or distribution of values of the same feature in the real training images.

Said features exemplarily comprise ranges and/or distributions of intensity values, image resolution values, lighting conditions, noise levels, and/or image artifacts such as motion artifacts present in the real training images.

Any one of the described neural network models may preferably be a convolutional neural network. In particular, any one of the neural network models may possess a residual neural network (ResNet) architecture or a U-Net architecture.

A particular body posture in the set of possible body postures may comprise a set of body posture keypoints specifying the particular body posture and a compatibility label indicating whether the particular body posture is compatible with the medical imaging examination performed by the medical imaging system.

The particular body posture may for example indicate the subject to be in a prone, supine or side position. The particular body posture may further indicate whether the head or feet of the subject face towards the medical imaging system, and/or whether the arms of the subject are positioned on the side of the body of the subject or raised over the head of the subject. The body posture keypoints may exemplarily be provided in a pre-existing dataset. Alternatively, the body posture keypoints may exemplarily be determined by application of the described method 100 or another method for detecting anatomical keypoints to training images of subjects positioned in the particular body posture.

The comparing of the augmented anatomical keypoints to the set of possible body postures may comprise overlaying the augmented anatomical keypoints on the body posture keypoints so as to minimize average or total distances between the anatomical keypoints and the body posture keypoints and providing the average or total distances as the similarity values. The selecting of the predicted body posture may comprise selecting a particular body posture from the set of possible body postures having a maximal similarity value. The determining if the predicted body posture matches a desired body posture may comprise an evaluation of the compatibility label of the selected body posture.

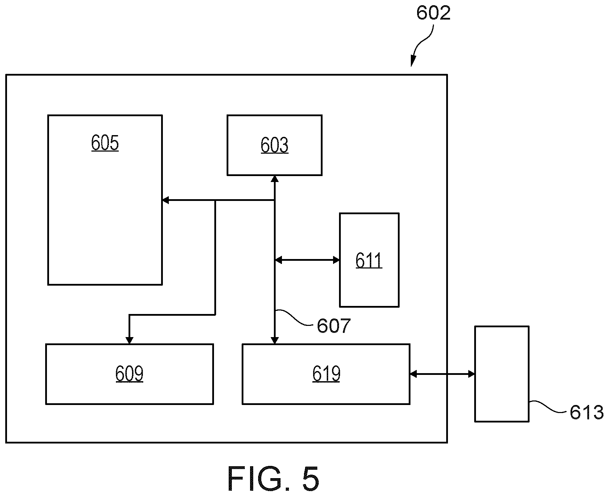

Fig. 5 is a block diagram of an exemplary computer system 602 for implementing the present method in accordance with an example of the present subject matter.The components of the computer system 602 may include, but are not limited to, one or more processors or processing units 603, a storage system 611, a memory unit 605, and a bus 607 that couples various system components including memory unit 605 to processor 603. The storage system 611 may include for example a hard disk drive (HDD). The memory unit 605 may include computer system readable media in the form of volatile memory, such as random access memory (RAM) and/or cache memory.

The computer system 602 may also communicate with one or more external devices such as a keyboard, a pointing device, a display 613, etc.; one or more devices that enable a user to interact with computer system 602; and/or any devices (e.g., network card, modem, etc.) that enable the computer system 602 to communicate with one or more other computing devices. Such communication can occur via I/O interface(s) 619. Still yet, the computer system 602 can communicate with one or more networks such as a local area network (LAN), a general wide area network (WAN), and/or a public network (e.g., the Internet) via a network adapter 609. As depicted, the network adapter 609 communicates with the other components of the client system 602 via bus 607.

The computer system 602 may preferably comprise a computer system 602 of the medical imaging system 402. The external devices may exemplarily comprise the camera and the patient support 400. Alternatively, the computer system 602 may be an external computer system communicatively coupled to the computer system 602 of the medical imaging system 402.
The memory unit 605 is configured to store applications that are executable on the processor 603. For example, the memory unit 605 may comprise an operating system as well as one or more application programs. The application programs comprise instructions that when executed enable to perform the method described before, e.g. with reference to Fig. 1.

As will be appreciated by one skilled in the art, aspects of the present disclosure may be implemented as an apparatus, method, computer program or computer program product. Accordingly, aspects of the present disclosure may take the form of an entirely hardware implementation, an entirely software implementation (including firmware, resident software, micro-code, etc.) or an implementation combining software and hardware aspects that may all generally be referred to herein as a "circuit," "module" or "system." Furthermore, aspects of the present disclosure may take the form of a computer program product embodied in one or more computer readable medium(s) having computer executable code embodied thereon. A computer program comprises the computer executable code or "program instructions".

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

Any combination of one or more computer readable medium(s) may be utilized. The computer readable medium may be a computer readable storage medium. A `computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

`Computer memory' or 'memory' is an example of a computer-readable storage medium. Computer memory is any memory which is directly accessible to a processor. `Computer storage' or 'storage' is a further example of a computer-readable storage medium. Computer storage is any nonvolatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present disclosure. Computer executable code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

It is understood that one or more of the aforementioned examples may be combined as long as the combined examples are not mutually exclusive.

While the invention has been illustrated and described in detail in the drawings and foregoing description, such illustration and description are to be considered illustrative or exemplary and not restrictive; the invention is not limited to the disclosed examples.

### REFERENCE SIGNS LIST

- 100: method
- 102, 104, 106, 108, 110, 112, 114, 116: method steps
- 200: anatomical keypoints
- 202: subject
- 204: image data
- 206: cropped image data
- 208: body part specific keypoints
- 210: augmented anatomical keypoints
- 300: anatomical model
- 300': keypoint connections
- 400: patient support
- 402: medical imaging system
- 404: occlusion
- 602: computer system
- 603: processors
- 605: memory unit
- 607: bus
- 609: network adapter
- 611: storage system
- 613: external devices
- 619: I/O-Interface

## Claims

1. A computer-implemented method (100) for detecting anatomical keypoints (200) using a camera configured to image at least a portion of a body of a subject (202),
the method comprising:
- receiving (102) image data (204) from the camera, the image data (204) comprising an image of the body;
- receiving (104) anatomical keypoint data in response to inputting the image data (204) into an anatomical keypoint detection neural network, wherein the anatomical keypoint detection neural network is configured to generate the anatomical keypoint data, wherein the anatomical keypoint data is descriptive of a set of anatomical keypoints (200);
- determining (106) the set of anatomical keypoints (200) from the anatomical keypoint data, wherein the set of anatomical keypoints (200) indicates keypoints of the body;
- detecting (108) a set of body parts of the body in the image data (204), resulting in cropped image data (206) of body parts in the set of body parts;
- receiving (110) body part specific keypoint data in response to inputting the cropped image data (206) into at least one body part specific keypoint detection neural network, wherein the at least one body part specific keypoint detection neural network is configured to generate the body part specific keypoint data, wherein the body part specific keypoint data is descriptive of a set of body part specific keypoints (208);
- determining (112) the set of body part specific keypoints (208) from the body part specific keypoint data, wherein the set of body part specific keypoints (208) indicates keypoints of the set of body parts;
- augmenting (114) the anatomical keypoints (200) by the body part specific keypoints (208); and
- providing (116) the augmented anatomical keypoints (210).

2. The method (100) according to claim 1, wherein the anatomical keypoint data comprises probability maps for individual keypoints in the set of anatomical keypoints (200), wherein the probability maps comprise probability values associated with the probability of the presence of the individual keypoints,
and/or wherein the body part specific keypoint data comprises probability maps for individual keypoints in the set of body part specific keypoints (208), wherein the probability maps comprise probability values associated with the probability of the presence of the individual body part specific keypoints (208), wherein the determining (106) of the set of anatomical keypoints (200) from the anatomical keypoint data and/or the determining (112) of the set of body part specific keypoints (208) from the body part specific keypoint data comprises determining positions of the individual keypoints based on the probability values, in particular wherein the positions correspond to pixels of the image data (204) or the cropped image data (206) associated with local maxima of the probability values.

3. The method (100) according to claim 1 or 2, further comprising a prediction of missing keypoints of the anatomical keypoints (200), wherein optionally
- the prediction of the missing keypoints comprises determining at least part of the missing keypoints from the set of body part specific keypoints (208); and/or
- the augmenting (114) comprises a changing of the positions, wherein the changing of the positions is performed based on distances between the positions of the anatomical keypoints (200) and the positions of the missing keypoints.

4. The method (100) according to claim 3, further comprising changing of the probability values of the anatomical keypoints (200) in response to adding the predicted missing keypoints to the anatomical keypoints (200), in particular wherein the changing of the probability values is performed based on distances between the positions of the anatomical keypoints (200) and the positions of the missing keypoints.

5. The method (100) according to any one of claims 3 or 4, further comprising:
- determining a subset of the anatomical keypoints (200), wherein the probability values of the subset of the anatomical keypoints (200) exceed a minimum keypoint probability threshold comprised in an anatomical model (300),
- the anatomical model (300) performing the predicting of the missing keypoints using the subset of the anatomical keypoints (200) as an input.

6. The method (100) according to claim 5, wherein any one of the following:
- the anatomical model (300) comprises a keypoint completion neural network, and wherein the keypoint completion neural network is configured to perform the predicting of the missing keypoints in response to receiving the subset of the anatomical keypoints (200) as input,
- the anatomical model (300) comprises a statistical model, wherein the statistical model comprises a set of parameterized limb lengths of the body of the subject and a set of probability distributions of joint angles of the body of the subject (202), wherein the predicting of the missing keypoints comprises predicting distances of the missing keypoints towards the subset of the anatomical keypoints (200) based on the set of parameterized limb lengths and predicting directions of the missing keypoints relative to the subset of anatomical keypoints (200) based on the set of probability distributions of joint angles.

7. The method (100) according to any one of claims 2 through 6, wherein the image data (204) and the cropped image data (206) comprise intensity values associated with the pixels of the image data (204) or the cropped image data (206),
wherein the generating of the anatomical keypoint data and/or the body part specific keypoint data comprises determining the probability maps from the intensity values,
wherein the determining of the positions of the individual keypoints based on the probability values comprises:
- fitting an expected statistical distribution to the probability values,
- determining deviations of the probability values from the expected statistical distribution, and
- determining the positions of the individual keypoints based on the deviations,
wherein preferably:
- the expected statistical distribution comprises a two-dimensional Gaussian distribution, and/or
- fitting the expected statistical distribution comprises:
- determining a set of local maxima of the probability values,
- fitting a set of expected statistical distributions centered on local maxima of the set of local maxima,
- determining an optimal expected statistical distribution from the set of expected statistical distributions,
- providing the optimal expected statistical distribution as the expected statistical distribution,
and/or wherein the determining of the positions of the individual keypoints based on the probability values comprises:
- evaluating statistical measures of the probability values in local vicinities around the pixels, wherein the positions of the individual keypoints are determined based on the evaluated statistical measures,
wherein preferably:
the statistical measures comprise sums, averages, and/or medians of the probability values in the local vicinities.

8. The method (100) according to any one of claims 6 or 7, wherein the anatomical model (300) further comprises subject metadata, the subject metadata being representative of a body shape of the subject (202), wherein the set of parameterized limb lengths and/or the set of probability distributions of joint angles is adapted based on the subject metadata.

9. The method (100) according to claim 8, wherein the subject metadata is received from a radiological information system and/or inferred from the image data (204) using object recognition algorithms configured for recognizing the body shape.

10. The method (100) according to any one of the preceding claims, the camera being registered with a patient support (400) for supporting the body of the subject (202), the method further comprising based on the augmented anatomical keypoints (210) moving the patient support (400) relative to a medical imaging system (402) for enabling an imaging of the body.

11. The method (100) according to any one of the preceding claims, wherein the detecting (108) of the set of body parts of the body of the subject (202) in the image data (204) comprises:
- segmenting the image comprised in the image data (204) into segmented images; and
- receiving the cropped image data (206) in response to inputting the segmented images into a body part recognition neural network.

12. The method (100) according to any one of the preceding claims, wherein the detecting (108) of the set of body parts is performed on a region of interest of the image data (204), wherein the anatomical keypoints (200) are contained within the region of interest, wherein the region of interest further comprises a minimal spacing distance, and wherein anyone of the following applies:
- edges of the region of interest are located at distances from the anatomical keypoints (200) exceeding the minimal spacing distance;
- the region of interest excludes image portions comprised in the image data (204) in case the image portions contain parts of the medical imaging system (402).

13. The method (100) according to any one of the preceding claims, wherein the method further comprises:
- comparing the augmented anatomical keypoints (210) to a set of possible body postures, resulting in similarity values between the augmented anatomical keypoints (210) and the set of possible body postures;
- selecting a predicted body posture from the set of possible body postures based on the similarity values;
- determining if the predicted body posture matches a desired body posture;
- in case the predicted body posture does not match the desired body posture, providing a warning signal, wherein the warning signal preferably comprises instructions for aligning the body of the subject (202) towards the desired body posture.

14. A computer system (602) configured for detecting anatomical keypoints (200) using a camera configured to image at least a portion of a body of a subject (202),
wherein the computer system (602) comprises a memory unit (605) storing machine executable instructions, an anatomical keypoint detection neural network, and at least one body part specific keypoint detection neural network,
wherein execution of the machine executable instructions causes the computer system (602) to:
- receive (102) image data (204) from the camera, the image data (204) comprising an image of the body;
- receive (104) anatomical keypoint data (200') in response to inputting the image data (204) into an anatomical keypoint detection neural network, wherein the anatomical keypoint detection neural network is configured to generate the anatomical keypoint data, wherein the anatomical keypoint data is descriptive of a set of anatomical keypoints (200);
- determine (106) the set of anatomical keypoints (200) from the anatomical keypoint data, wherein the set of anatomical keypoints (200) indicates keypoints of the body;
- detect (108) a set of body parts of the body in the image data (204), resulting in cropped image data (206) of body parts in the set of body parts;
- receive (110) body part specific keypoint data in response to inputting the cropped image data (206) into at least one body part specific keypoint detection neural network, wherein the at least one body part specific keypoint detection neural network is configured to generate the body part specific keypoint data, wherein the body part specific keypoint data is descriptive of a set of body part specific keypoints (208);
- determine (112) the set of body part specific keypoints (208) from the body part specific keypoint data, wherein the set of body part specific keypoints (208) indicates keypoints of the set of body parts;
- augment (114) the anatomical keypoints (200) by the body part specific keypoints (208); and
- provide (116) the augmented anatomical keypoints (210).

15. A computer program product comprising machine executable instructions configured for causing a computer system (602) to perform the method (100) of any one of claims 1 through 13.
